# FASCICULE DE BREVET EUROPEEN

(11) **EP 2 379 945 B1**
(45) Date de publication et mention de la délivrance du brevet: **15.07.2015**
(21) Numéro de dépôt: 09752198.3
(22) Date de dépôt: 01.10.2009
(51) Int. Cl.: F23R 3/06, F23R 3/10, F23R 3/50

(54) **CHAMBRE ANNULAIRE DE COMBUSTION DE TURBOMACHINE À UNE SEULE RANGÉE ANNULAIRE D'ORIFICES D'ENTRÉE D'AIR PRIMAIRE ET DE DILUTION**
RINGBRENNKAMMER FÜR EINE GASTURBINE MIT EINER EINZIGEN RINGFÖRMIGEN REIHE VON EINLASSÖFFNUNGEN FÜR PRIMÄR- UND VERDÜNNUNGSLUFT
ANNULAR COMBUSTION CHAMBER FOR A GAS TURBINE ENGINE WITH A SINGLE ANNULAR ROW OF INTAKE OPENINGS FOR PRIMARY AND DILUTION AIR

(30) Priorité: 19.01.2009 FR 0900221
(43) Date de publication de la demande: 26.10.2011
(73) Titulaire: Snecma, 75015 Paris (FR)
(72) Inventeur: BOURGOIS, Sébastien, Alain, Christophe, F-77550 MOISSY CRAMAYEL CEDEX (FR); COMMARET, Patrice, André, F-77550 MOISSY CRAMAYEL CEDEX (FR); CORTES, Thierry, André, Emmanuel, F- 77550 MOISSY CRAMAYEL CEDEX (FR)
(74) Mandataire: Ramey, Daniel
(86) Numéro de dépôt international: PCT/FR2009/001176
(87) Numéro de publication internationale: WO 2010/081941

(56) Documents cités:
- EP-A- 0 803 681
- EP-A- 1 235 032
- US-A1- 2003 177 769

## Description

La présente invention concerne une chambre annulaire de combustion d'une turbomachine, telle qu'un turboréacteur ou un turbopropulseur d'avion.

Une telle chambre de combustion comprend deux parois de révolution coaxiales qui s'étendent l'une à l'intérieur de l'autre et qui sont reliées à leurs extrémités amont par une paroi annulaire de fond de chambre comportant des ouvertures dans lesquelles sont montés des systèmes d'injection de carburant.

Les parois interne et externe de la chambre comportent des orifices d'entrée d'air primaire et des orifices d'entrée d'air de dilution. Dans la technique actuelle, chaque paroi de la chambre comporte une rangée annulaire d'orifices d'entrée d'air primaire et une rangée annulaire d'orifices d'entrée d'air de dilution, la rangée d'orifices d'entrée d'air primaire étant située en amont de la rangée d'orifices d'entrée d'air de dilution. L'air amené par les orifices d'entrée d'air primaire a pour but d'empêcher les zones de recirculation dans la chambre et d'alimenter en air la chambre pour assurer une combustion stoechiométrique du carburant, et l'air qui passe par les orifices d'entrée d'air de dilution de la chambre permet de contrôler le profil de température dans la chambre en diminuant la température des gaz de combustion jusqu'à une température acceptable par la turbine de la turbomachine, montée en aval de la chambre.

Des oxydes d'azote (NOₓ) sont produits dans la zone de combustion stoechiométrique et les zones voisines, où la richesse du mélange air-carburant est comprise entre 0,7 et 1,3, et sont rejetés à l'atmosphère. C'est essentiellement dans le volume intermédiaire de la chambre situé entre la rangée d'orifices d'entrée d'air primaire et la rangée d'orifices d'entrée d'air de dilution que sont produits les oxydes d'azote.

On a déjà proposé, pour réduire ces émissions de composés polluants, une chambre de combustion du type RQL (Rich Quench Lean) comprenant une zone primaire de combustion où la richesse est supérieure à la stoechiométrie, suivie d'un pincement comportant des trous d'injection d'air primaire pour réaliser une dilution rapide. Toutefois, cette solution favorise la production de fumées dans la zone primaire et pose des problèmes de tenue thermique du pincement.

Une telle chambre de combustion est décrite dans le document EP 1 235 032 A2.

Une autre solution connue consiste à réaliser une combustion étagée dans une chambre double tête comportant deux séries de systèmes d'injection et deux zones de combustion optimisées pour les bas régimes et pour les régimes élevés, respectivement. Les inconvénients de cette solution sont sa masse plus importante, son coût et la complexité du pilotage de la chambre.

Une autre technique consiste à utiliser une chambre multipoint dans laquelle tout l'air primaire est introduit par le fond de chambre à travers le système d'injection pour créer un mélange pauvre aux régimes élevés et des zones localement riches au ralenti (voir par exemple le document US 2004-025508 de la déposante et le document EP 1 235 032). Cette technique permet de réduire la formation des oxydes d'azote mais reste complexe et onéreuse.

On a aussi proposé de réduire le volume intermédiaire précité de la chambre de combustion en décalant vers l'amont la rangée d'orifices d'entrée d'air de dilution, c'est-à-dire en diminuant la distance entre les rangées d'orifices d'air primaire et d'air de dilution. Cependant, cette solution ne permet pas de diminuer suffisamment les émissions d'oxydes d'azote.

L'invention a notamment pour but de réduire les émissions d'oxydes d'azote dans une chambre de combustion de turbomachine, d'une façon simple, efficace et économique.

Elle propose à cet effet une chambre annulaire de combustion d'une turbomachine, telle qu'un turboréacteur ou un turbopropulseur d'avion, comprenant des parois de révolution coaxiales s'étendant l'une à l'intérieur de l'autre et comportant des orifices d'entrée d'air primaire et des orifices d'entrée d'air de dilution dans la chambre, les orifices d'entrée d'air primaire et les orifices d'entrée d'air de dilution de chaque paroi étant alignés les uns avec les autres et forment une seule rangée annulaire d'orifices.

La chambre de combustion comprend une paroi de fond de chambre reliant les extrémités amont de ses parois de révolution et comportant des ouvertures dans lesquelles sont montés des systèmes d'injection de carburant et des déflecteurs. La distance entre la rangée annulaire d'orifices de chaque paroi et ce déflecteur, mesurée le long de l'axe de l'ouverture correspondante, est avantageusement sensiblement égale à la moitié de la hauteur de la zone primaire de combustion dans la chambre, pour s'assurer qu'un débit d'air primaire et un débit d'air de dilution pénètre dans la chambre par les orifices précités.

Chaque paroi de la chambre de combustion selon l'invention comporte donc une seule rangée d'orifices d'entrée d'air primaire et d'air de dilution, contre deux dans la technique antérieure. L'invention permet donc de supprimer (et non pas de réduire, comme c'était le cas dans la technique antérieure) le volume intermédiaire de la chambre, et donc de diminuer de manière significative les émissions d'oxydes d'azote de la chambre. Elle permet en outre de réduire le coût de fabrication des parois de la chambre grâce à la suppression de l'usinage d'une rangée annulaire d'orifices.

Les orifices de chaque paroi de la chambre servent à la fois à l'entrée d'air primaire et d'air de dilution dans la chambre. Une partie seulement du débit d'air primaire passant à travers les orifices d'entrée d'air primaire dans la technique antérieure, est destinée à passer à travers les orifices d'air primaire et de dilution de la chambre. L'autre partie du débit d'air primaire est destinée à alimenter les systèmes d'injection de carburant montés sur la paroi de fond de chambre de la chambre de combustion. La partie du débit d'air primaire passant à travers les orifices selon l'invention sert uniquement à empêcher les zones de recirculation dans la chambre et représente environ 25% du débit d'air primaire total. La partie du d'air primaire passant par les systèmes d'injection de la chambre assure l'alimentation en air de la chambre et représente environ 75% du débit d'air primaire total. L'invention permet donc de dissocier les deux fonctions précitées qui étaient assurées dans la technique antérieure par les seuls orifices d'entrée d'air primaire de la chambre.

Les orifices de chaque paroi de la chambre sont situés sur une courbe centrée sur l'axe longitudinal de la chambre. Dans une réalisation, la ligne sur laquelle sont situés les orifices est sensiblement circulaire. Les orifices sont alors situés dans un plan transversal, ce plan pouvant être perpendiculaire à l'axe de la chambre.

En variante, au moins certains des orifices de chaque paroi de la chambre peuvent être situés sur une ligne formée d'arcs de cercle ou d'ondulations.

Les parois de la chambre peuvent en outre comporter des multiperforations pour le passage d'air de refroidissement.

Les orifices d'entrée d'air primaire et d'air de dilution de chaque paroi sont préférentiellement régulièrement répartis autour de l'axe longitudinal de la chambre.

La forme et/ou les dimensions des orifices de chaque paroi peuvent être sensiblement identiques ou bien être différentes, en particulier en fonction de la position des orifices par rapport aux systèmes d'injection de carburant montés en amont de la chambre.

Avantageusement, le nombre d'orifices d'air primaire et d'air de dilution de chaque paroi de la chambre est égal à k fois le nombre de ces systèmes d'injection, k étant égal à 2, 3 ou 4.

Les orifices d'air primaire et d'air de dilution ont préférentiellement un diamètre compris entre 5 et 20mm, et de préférence entre 10 et 15mm.

Les systèmes d'injection précités peuvent comprendre des moyens d'alimentation en air de la chambre avec une partie du débit d'air primaire destinée à pénétrer dans la chambre, l'autre partie du débit d'air primaire étant destinée à passer à travers les orifices de chaque paroi de la chambre, comme cela est décrit dans ce qui précède.

L'invention concerne également une turbomachine, telle qu'un turboréacteur ou un turbopropulseur d'avion, caractérisée en ce qu'elle comprend une chambre de combustion telle que décrite ci-dessus.

L'invention sera mieux comprise et d'autres caractéristiques, détails et avantages de la présente invention apparaîtront plus clairement à la lecture de la description suivante faite à titre d'exemple non limitatif et en référence aux dessins annexés dans lesquels :
- la figure 1 est une demi-vue schématique en coupe axiale d'une chambre de combustion de turbomachine selon la technique antérieure ;
- la figure 2 est une vue schématique partielle en perspective des parois de la chambre de la figure 1 ;
- la figure 3 est une demi-vue schématique en coupe axiale d'une chambre de combustion de turbomachine selon l'invention ;
- la figure 4 est une vue schématique partielle en perspective des parois de la chambre de la figure 3 ;
- la figure 5 est une vue très schématique partielle d'une paroi de révolution d'une chambre selon l'invention, vue dans une direction radiale ;
- les figures 6 et 7 sont des vues correspondant à la figure 5 et représentent des variantes de réalisation d'une paroi de chambre selon l'invention.

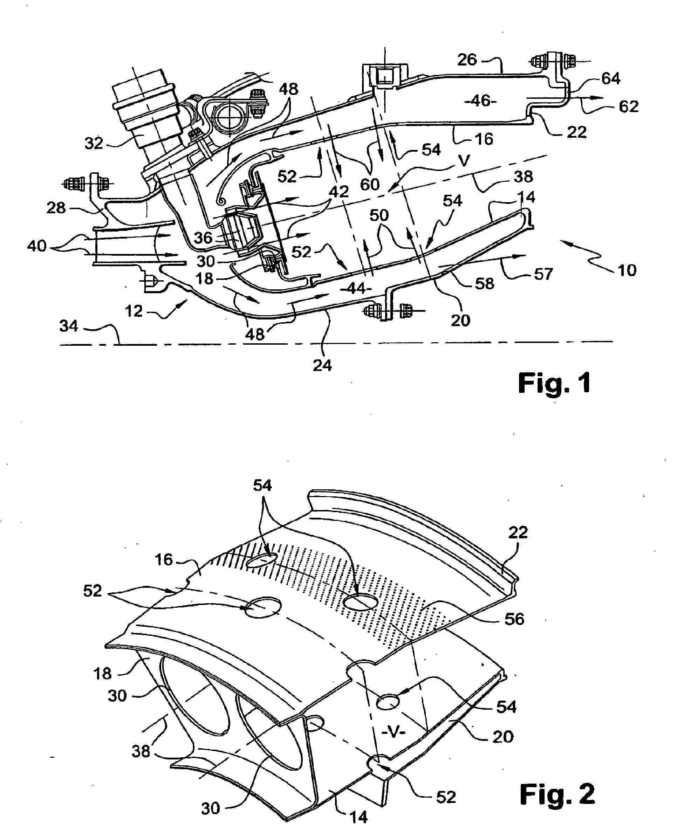

On se réfère d'abord à la figure 1 qui représente une chambre annulaire de combustion 10 de turbomachine qui est agencée en sortie d'un diffuseur 12, lui même situé en sortie d'un compresseur, non représenté, et qui comprend des parois de révolution interne 14 et externe 16 reliées en amont par une paroi annulaire 18 de fond de chambre. Les parois 14, 16 de la chambre sont fixées en aval par des brides annulaires interne 20 et externe 22 respectivement sur un voile tronconique interne 24 du diffuseur, et sur une extrémité d'un carter externe 26 de la chambre, l'extrémité amont de ce carter 26 étant reliée à un voile tronconique externe 28 du diffuseur.

La paroi 18 de fond de chambre comporte des ouvertures 30 (figures 1 et 2) à travers lesquelles passent de l'air provenant du diffuseur 12 et du carburant amené par des injecteurs 32 fixés sur le carter externe 26 et régulièrement répartis sur une circonférence autour de l'axe longitudinal 34 de la chambre. Chaque injecteur 32 comprend une tête 36 d'injection de carburant montée dans une ouverture 30 de la paroi annulaire 18 et alignée avec l'axe 38 de cette ouverture 30.

Une partie du débit d'air fourni par le compresseur et sortant du diffuseur 12 (flèches 40) passe par les ouvertures 30 et alimente la chambre de combustion 10 (flèches 42), l'autre partie du débit d'air alimentant des veines annulaires interne 44 et externe 46 de contournement de la chambre de combustion 10 (flèches 48).

La veine interne 44 est formée entre le voile interne 24 du diffuseur 12 et la paroi interne 14 de la chambre, et l'air qui passe dans cette veine se partage en un débit 50 qui pénètre dans la chambre 10 par deux rangées d'orifices 52, 54 de la paroi interne 14 et en un débit 57 qui passe à travers des trous 58 de la bride interne 20 de la chambre pour aller refroidir des composants, non représentés, situés en aval de cette chambre.

La veine externe 46 est formée entre le carter externe 26 et la paroi externe 16 de la chambre, et l'air qui passe dans cette veine se partage en un débit 60 qui pénètre dans la chambre 10 par deux rangées d'orifices 52, 54 de la paroi externe 16 et en un débit 62 qui passe à travers des trous 64 de la bride externe 22 pour aller refroidir des composants en aval.

Les deux rangées d'orifices 52, 54 de chaque paroi 14, 16 de la chambre sont annulaires et distantes axialement l'une de l'autre, comme cela est bien visible aux figures 1 et 2. Les orifices 52 de la rangée annulaire amont sont des orifices d'entrée d'air primaire et fournissent à la chambre un débit d'air assurant une combustion stoechiométrique du carburant à l'intérieur de la chambre. Les orifices 54 de la rangée annulaire aval sont des orifices d'entrée d'air de dilution pour le refroidissement des gaz de combustion jusqu'à une température acceptable par la turbine de la turbomachine, montée en aval de la chambre et non représentée dans les dessins.

En outre, les parois 14, 16 de la chambre comportent des multiperforations (non visibles en figure 1 et représentées schématiquement en 56 en figure 2) servant au passage d'air de refroidissement de ces parois.

Le débit d'air passant par les orifices 52 d'air primaire et le débit d'air 42 passant par le système d'injection représentent chacun 15-25% du débit d'air 40 fourni par le diffuseur.

Le débit d'air par les orifices 54 d'air de dilution est d'environ 20 à 30% et le débit d'air passant par les multiperforations 56 et par des orifices de refroidissement du fond de chambre 18 est d'environ 30 à 40% du débit total 40.

L'invention permet de réduire de manière significative les émissions d'oxydes d'azote d'une chambre annulaire de combustion en supprimant le volume intermédiaire V compris entre les deux rangées annulaires d'orifices d'air primaire et d'air de dilution. Pour cela, la rangée aval d'orifices d'air de dilution est confondue avec la rangée amont d'orifices d'air primaire pour former une rangée unique dont les orifices servent à la fois à l'entrée d'air primaire et à l'entrée d'air de dilution.

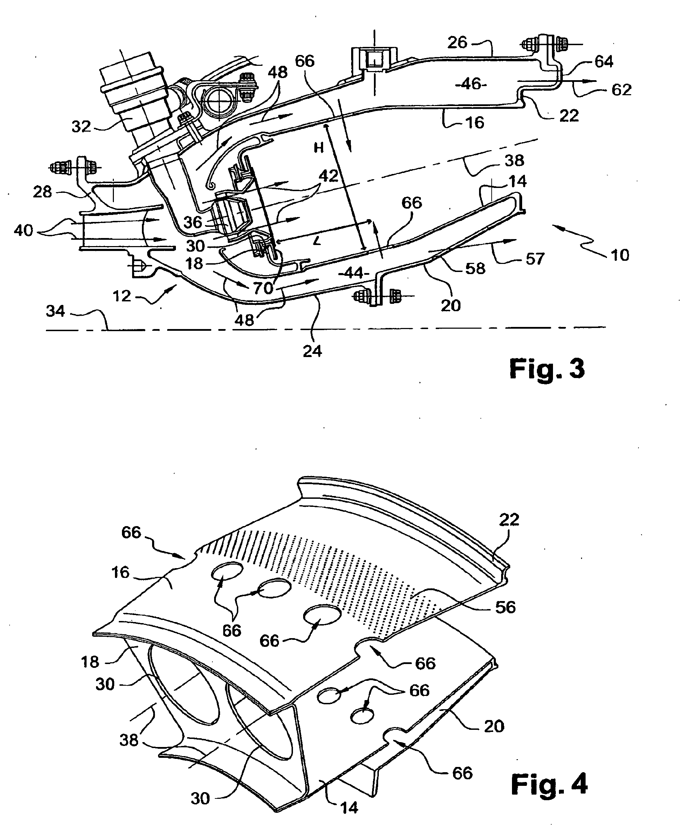

Dans l'exemple de réalisation de l'invention représenté aux figures 3 et 4, chaque paroi 14, 16 de la chambre comporte une seule rangée annulaire d'orifices d'entrée d'air primaire et d'air de dilution, ces orifices étant désignés par la même référence 66 car ils assurent chacun la double fonction d'alimentation de la chambre en air primaire et en air de dilution.

Les parois 14, 16 de la chambre comportent en outre des multiperforations 56 de passage d'air de refroidissement de ces parois.

Le débit d'air passant par les orifices 66 représente environ 25 à 50%, de préférence 30 à 35%, et par exemple 32% du débit d'air 40 fourni par le diffuseur. Ce débit d'air comprend un débit d'air de dilution (20 à 30% environ) et un débit d'air primaire (2 à 12% environ). Le débit d'air 42 représente 30 à 40%, et par exemple 38% (ce débit comprenant environ 13 à 23% d'air primaire), du débit d'air 40 et le débit d'air de refroidissement du fond de chambre et d'air passant par les multiperforations 56 représente environ 30% du débit total.

Le débit d'air (25-50%) passant à travers les orifices 66 est donc supérieur au débit d'air (15-25%) passant par les orifices 52 d'air primaire de la chambre de la technique antérieure, et le débit d'air 42 passant par le système d'injection (30-40%) est ici également supérieur au débit d'air 42 (15-25%) de la technique antérieure. L'augmentation du débit d'air passant par le système d'injection est favorable à la diminution des émissions d'oxydes d'azote, et l'augmentation du débit d'air passant par les orifices 66 permet de mieux maîtriser le profil de température vu par la turbine en sortie de la chambre de combustion.

De plus, une partie du débit d'air primaire (environ 1/4 du débit total d'air primaire) passe à travers les orifices 66 et a pour but d'empêcher les zones de recirculation dans la chambre, et le reste du débit d'air primaire (représentant donc 3/4 du débit total d'air primaire) passe à travers les systèmes d'injection et à pour fonction d'alimenter en air la chambre.

La position axiale de la rangée d'orifices 66 est de préférence située entre les positions axiales des rangées d'orifices 52, 54 de la technique antérieure. Cela permet de compenser la réduction du domaine de rallumage de la chambre, due à l'augmentation du débit d'air participant à la combustion dans la zone primaire de la chambre.

Selon l'invention, la position axiale des orifices 66 sur chaque paroi est telle que la distance axiale L entre les axes des orifice 66 et des déflecteur 70 montés dans les ouvertures 30 de la paroi de fond de chambre 18 (mesurée le long de l'axe 38 d'une ouverture 30), est sensiblement égale à la moitié de la hauteur H de la zone primaire de combustion (figure 3), c'est-à-dire à la distance entre les parois interne 14 et externe 16 de la chambre (mesurée dans un plan perpendiculaire à l'axe 38).

Les orifices 66 peuvent avoir une forme et/ou des dimensions identiques ou différentes les uns par rapport aux autres. Ils peuvent avoir une forme quelconque : circulaire, oblongue, etc. Leur diamètre est compris entre 5 et 20mm, et de préférence entre 10 et 15mm. Dans un exemple particulier de réalisation de l'invention, les orifices 66 de la paroi externe ont un diamètre de 14,5mm environ et ceux de la paroi interne ont un diamètre d'environ 12mm.

Le nombre d'orifices 66 de chaque paroi 14, 16 peut être déterminé en fonction du nombre d'injecteurs 32 équipant la turbomachine. Le nombre d'orifices de chaque paroi 14, 16 est par exemple égal à k fois le nombre d'injecteurs, k étant égal à 2, 3 ou 4.

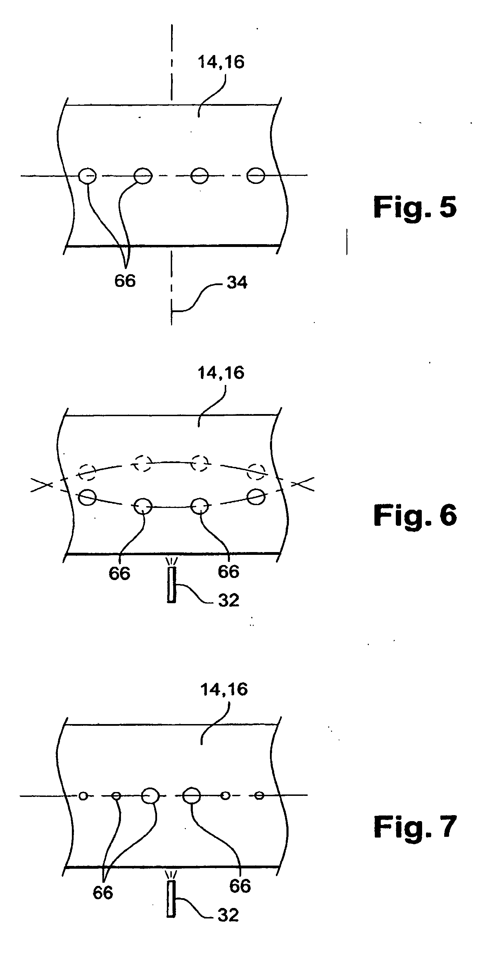

On se réfère désormais aux figures 5 à 7 qui représentent des variantes de réalisation des parois 14, 16 de la chambre selon l'invention.

Les paroi 14, 16 de la figure 5 sont similaires à celles de l'exemple de réalisation des figures 3 et 4, et comprennent une rangée annulaire d'orifices 66 qui sont régulièrement répartis sur une circonférence centrée sur l'axe longitudinal 34 de la chambre.

Les orifices 66 sont situés dans un même plan sensiblement perpendiculaire à l'axe 34 de la chambre et sont alignés les uns avec les autres sur une ligne sensiblement circulaire. Lorsque la paroi 14, 16 est observée en direction radiale (depuis l'extérieur dans le cas de la paroi externe 16), cette ligne est sensiblement droite et perpendiculaire à l'axe 34 de la chambre.

Dans la variante de réalisation de la figure 6, les orifices 66 sont situés sur une ligne courbe qui forme un arc de cercle sur la paroi, lorsque cette dernière est observée en direction radiale. Les orifices 66 représentés en traits continus sont situés sur une ligne courbe dont la concavité est orientée vers l'aval et les orifices représentés en traits discontinus sont situés sur une ligne courbe dont la concavité est orientée vers l'amont. La ligne sur laquelle les orifices 66 sont situés peut former des ondulations sur la paroi, sur tout le pourtour de celle-ci.

Les orifices 66 peuvent par exemple être disposés de façon à ce que les orifices les plus amont (ou les plus aval) soient alignés en direction axiale avec les injecteurs 32.

Les orifices 66 de la variante de la figure 7 diffèrent de ceux de la figure 5 en ce que leur diamètre varie en fonction de leur position vis-à-vis des injecteurs 32. Les orifices 66 situés à proximité des injecteurs ont un diamètre supérieur à celui des autres orifices dans l'exemple représenté.

## Revendications

1. Chambre annulaire de combustion (10) d'une turbomachine, telle qu'un turboréacteur ou un turbopropulseur d'avion, comprenant des parois de révolution (14, 16) coaxiales s'étendant l'une à l'intérieur de l'autre et comportant des, orifices (66) d'entrée d'air primaire et des orifices (66) d'entrée d'air de dilution dans la chambre (30), les orifices (66) d'entrée d'air primaire et les orifices (66) d'entrée d'air de dilution de chaque paroi étant sensiblement alignés les uns avec les autres autour de l'axe longitudinal (34) de la chambre (10) et formant une seule rangée annulaire d'orifices (66) la chambre de combustion (10) comprenant une paroi de fond de chambre (18) reliant les extrémités amont des parois de révolution (14, 16) et comportant des ouvertures (30) dans lesquelles sont montés des systèmes (36) d'injection de carburant et des déflecteurs (70), **caractérisée en ce que** la distance (L) entre la rangée annulaires d'orifices (66) et le déflecteur (30) mesurée le long de l'axe (38) de l'ouverture correspondante (30) est sensiblement égale à la moitié de la hauteur (H) de la zone primaire de combustion dans la chambre (10).

2. Chambre selon la revendication 1, **caractérisée en ce que** la rangée annulaire d'orifices (66) de chaque paroi (14, 16) est sensiblement circulaire.

3. Chambre selon la revendication 1, **caractérisée en ce que** la rangée annulaire d'orifices (66) de chaque paroi de revolution (14, 16) est formée d'arcs de cercles ou d'ondulations.

4. Chambre selon l'une des revendications précédentes, **caractérisée en ce que** les parois de revolution (14, 16) de la chambre (10) comportent en outre des multlperforations (56) pour le passage d'air de refroidissement.

5. Chambre selon l'une des revendications précédentes, **caractérisée en ce que** la forme et/ou les dimensions des orifices (66) de chaque paroi de revolution (14, 16) sont sensiblement identiques.

6. Chambre selon l'une des revendications 1 à 4, **caractérisée en ce que** la forme et/ou les dimensions des orifices (66) de chaque paroi de revolution (14, 16) diffèrent les unes des autres, en particulier en fonction de la position de ces orifices (66) par rapport à des systèmes (32) d'injection de carburant montés en amont de la chambre (10).

7. Chambre selon l'une des revendications précédentes, **caractérisée en ce que** tes orifices (66) ont un diamètre compris entre 5 et 20mm, et de préférence entre 10 et 15mm.

8. Chambre selon l'une des revendications précédentes, **caractérisée en ce que** le nombre d'orifices (66) de chaque paroi de revolution (14, 16) de la chambre (10) est égal à k fois le nombre de systèmes (32) d'injection de carburant montés en amont de la chambre (10), k étant égal à 2, 3 ou 4.

9. Chambre selon l'une des revendications précédentes, **caractérisée en ce que** les systèmes d'injection (36) comprennent dés moyens d'alimentation en air de la chambre (10) avec une partie du débit d'air primaire destinée à pénétrer dans la chambre (10), l'autre partie du débit d'air primaire étant destinée à passer à travers les orifices (66) de chaque paroi de revolution (14, 16) de la chambre (10).

10. Chambre selon l'une des revendications précédentes, **caractérisée en ce que** la chambre annulaire de combustion (10) est agencée en sortie d'un diffuseur (12) à travers lequel un air (40) comprenant un air primaire et un air de dilution peut circuler, les orifices (66) étant définis de manière à ce qu'un débit d'air passant à travers représente 25% à 50% du débit d'air (40) fourni par le diffuseur.

11. Chambre selon la revendication 10, **caractérisée en ce que** les ouvertures (30) de la paroi de fond de chambre (18) sont définies de manière à ce qu'un débit d'air (42) passant à travers représente 30% à 40% du débit d'air (40) fourni par le diffuseur.

12. Turbomachine, telle qu'un turboréacteur ou un turbopropulseur d'avion, **caractérisée en ce qu'**elle comprend Une chambre de combustion (10) selon l'une des revendications précédentes.

## Patentansprüche

1. Ringbrennkammer (10) bei einer Turbomaschine bzw. einem Turbotriebwerk, wie etwa einem Turbostrahltriebwerk oder einem Turbopropellertriebwerk für Flugzeuge, enthaltend koaxial verlaufende Umlaufwände (14, 16), von denen sich die eine innerhalb der anderen erstreckt und die Einlassöffnungen (66) für den Einlass von Primärluft und Einlassöffnungen (66) für den Einlass von Verdünnungsluft in die Kammer (10) aufweisen, wobei die Einlassöffnungen (66) zum Einlass von Primärluft und Einlassöffnungen (66) zum Einlass von Verdünnungsluft einer jeden Wand um die Längschase (34) der Kammer (10) herum im Wesentlichen miteinander fluchten und eine einzige ringförmige Reihe von Öffnungen (66) bilden, wobei die Brennkammer (10) eine Kammerbodenwand (18) aufweist, welche die stromaufwärtigen Enden der Umlaufwände (14, 16) verbindet und Öffnungen (30) aufweist, in welche Einrichtungen (36) zum Einspritzen von Kraftstoff und Deflektoren (70) angebracht sind, **dadurch gekennzeichnet, dass** der Abstand (L) zwischen der ringförmigen Reihe von Öffnungen (66) und dem Deflektor, gemessen entlang der Achse (38) der entsprechenden Öffnung (30), im Wesentlichen gleich der halben Höhe (H) des primären Brennbereichs in der Kammer (10) ist.

2. Kammer nach Anspruch 1, **dadurch gekennzeichnet, dass** die ringförmige Reihe von Öffnungen (66) einer jeden umlauf Wand (14, 16) im Wesentlichen kreisförmig ist.

3. Kammer nach Anspruch 1, **dadurch gekennzeichnet, dass** die ringförmige Reihe von Öffnungen (66) einer jeden Umlaufwand (14, 16) aus Kreisbögen bzw. Wellen gebildet ist.

4. Kammer nach einem der vorangehenden Ansprüche, **dadurch gekennzeichnet, dass** die Umlaufwände (14, 16) der Kammer (10) ferner Mehrfachlochungen (56) für den Durchtritt von Kühlluft aufweisen.

5. Kammer nach einem der vorangehenden Ansprüche, **dadurch gekennzeichnet, dass** die Form und/oder die Abmessungen der Öffnungen (66) einer jeden Umlaufwand (14, 16) im Wesentlichen identisch sind.

6. Kammer nach einem der Ansprüche 1 bis 4, **dadurch gekennzeichnet, dass** die Form und/oder die Abmessungen der Öffnungen (66) einer jeden Umlaufwand (14, 16) sich voneinander unterscheiden, insbesondere in Abhängigkeit von der Position dieser Öffnungen (66) bezüglich der Kraftstoffeinspritzeinrichtungen (32), die der Kammer (10) vorgelagert sind.

7. Kammer nach einem der vorangehenden Ansprüche, **dadurch gekennzeichnet, dass** die Öffnungen (66) einen Durchmesser zwischen 5 und 20 mm, vorzugsweise zwischen 10 und 15 mm haben.

8. Kammer nach einem der vorangehenden Ansprüche, **dadurch gekennzeichnet, dass** die Anzahl an Öffnungen (66) einer jeden Umlaufwand (14, 16) der Kammer (10) gleich dem k-fachen der Anzahl an Kraftstoffeinspritzeinrichtungen (32) ist, die der Kammer (10) vorgelagert sind, wobei k gleich 2, 3 oder 4 ist.

9. Kammer nach einem der vorangehenden Ansprüche, **dadurch gekennzeichnet, dass** die Einspritzeinrichtungen (36) Versorgungsmittel zum Versorgen der Kammer (10) mit Luft aufweisen, wobei ein Teil der Primärluftdurchsatzmenge dazu bestimmt ist, in die Kammer (10) einzuströmen und der andere Teil der Primärluftdurchsatzmenge dazu bestimmt ist, durch die Öffnungen (66) einer jeden Umlaufwand (14, 16) der Kammer (10) hindurch zu strömen.

10. Kammer nach einem der vorangehenden Ansprüche, **dadurch gekennzeichnet, dass** die Ringbrennkammer (10) am Auslass eines Diffusors (12) angeordnet ist, durch den hindurch eine Luft (40) mit einer Primärluft und einer Verdünnungsluft zirkulieren kann, wobei die Öffnungen (66) so definiert sind, dass eine durchströmende Luftdurchsatzmenge 25 % bis 50 % der Luftdurchsatzmenge (40) entspricht, die von dem Diffusor bereitgestellt wird.

11. Kammer nach Anspruch 10, **dadurch gekennzeichnet, dass** die Öffnungen (30) der Kammerbodenwand (18) so definiert sind, dass eine durchströmende Luftdurchsatzmenge (42) 30 % bis 40 % der Luftdurchsatzmenge (40) entspricht, die von dem Diffusor bereitgestellt wird.

12. Turbomaschine bzw. Turbotriebwerk, wie etwa Turbostrahltriebwerk oder Turbopropellertriebwerk für Flugzeuge, **dadurch gekennzeichnet, dass** sie bzw. es eine Brennkammer (10) nach einem der vorangehenden Ansprüche aufweist.

## Claims

1. An annular combustion chamber (10) for a turbomachine, such as an airplane turboprop or turbojet, comprising coaxial walls (14, 16) forming surfaces of revolution which extend one into the other and include inlet primary air orifices (66) and dilution air orifices (66) for respectively admitting primary air and dilution air into the chamber (10), the primary air inlet orifices (66) and the dilution air inlet orifices (66) in each wall being substantially in alignment with one another around the longitudinal axis (34) of the chamber (10) and forming a single annular row of orifices (66), the combustion chamber (10) including a chamber end wall (18) connecting together upstream ends of the walls (14, 16) forming surfaces of revolution and including openings (30) in which fuel injection systems (36) and deflectors (70) are mounted, **characterized in that** the distance (L) between the annular row of orifices (66) and the deflector (70) as measured along the axis (38) of the corresponding opening (30) is substantially equal to half the height (H) of the primary combustion zone in the chamber (10).

2. A chamber according to claim 1, **characterized in that** the annular row of orifices (66) in each wall (14, 16) is substantially circular.

3. A chamber according to claim 1, **characterized in that** the annular row of orifices (66) in each wall (14, 16) forming surfaces of revolution is made up of circular arcs or undulations.

4. A chamber according to any preceding claim, **characterized in that** the walls (14, 16) forming surfaces of revolution of the chamber (10) further include multiple perforations (56) for passing cooling air.

5. A chamber according to any preceding claim, **characterized in that** the shape and/or the dimensions of the orifices (66) in each wall (14, 16) forming surfaces of revolution are substantially identical.

6. A chamber according to any one of claims 1 to 4, **characterized in that** the shape and/or dimensions of the orifices (66) in each wall (14, 16) forming surfaces of revolution differ from one another, in particular as a function of the positions of said orifices (66) relative to fuel injection systems (32) mounted upstream of the chamber (10).

7. A chamber according to any preceding claim, **characterized in that** the orifices (66) have a diameter lying in the range 5 mm to 20 mm, preferably in the range 10 mm to 15 mm.

8. A chamber according to any preceding claim, **characterized in that** the number of orifices (66) in each wall (14, 16) forming surfaces of revolution of the chamber is equal to k times the number of fuel injection systems (32) mounted upstream of the chamber (10), where k is equal to 2, 3, or 4.

9. A chamber according to any preceding claim,, **characterized in that** the injection systems (36) comprise means for feeding the chamber (10) with air comprising a fraction of the primary air flow that is to penetrate into the chamber (10), the remainder of the primary air flow being arranged to pass through the orifices (66) of each wall (14,16) forming surfaces of revolution of the chamber (10).

10. A chamber according to any preceding claim,, **characterized in that** the annular combustion chamber (10) is disposed at an end of a diffuser (12) through which air (40) including primary air and dilution air can circulate, the orifices (66) being designed so that an air flow passing therethrough represents about 25% to 50% of the air flow (40) delivered by the diffuser.

11. A chamber according to claim 10, **characterized in that** the openings (30) of the chamber end wall (18) are designed so that an air flow (42) passing therethrough represents about 30% to 40% of the air flow (40) delivered by the diffuser.

12. A turbomachine, such as an airplane turboprop or turbojet, **characterized in that** it includes a combustion chamber (10) according to any preceding claim.
